# EUROPEAN PATENT APPLICATION

(11) **EP 4 485 664 A1**
(43) Date of publication of application: **01.01.2025**
(21) Application number: 23759851.1
(22) Date of filing: 16.02.2023
(51) Int. Cl.: H01M 50/414, H01M 50/431, H01M 50/443, H01M 50/446, H01M 50/451

(54) **RAW MATERIAL OF COATING MATERIAL FOR SECONDARY BATTERY SEPARATOR, COATING MATERIAL FOR SECONDARY BATTERY SEPARATOR, SECONDARY BATTERY SEPARATOR, AND SECONDARY BATTERY**

(30) Priority: 22.02.2022 JP 2022025376
(71) Applicant: Mitsui Chemicals, Inc., Tokyo 104-0028 (JP)
(72) Inventor: TOMITA, Yoshihiko, Sodegaura-shi, Chiba 299-0265 (JP); LI, Wei, Sodegaura-shi, Chiba 299-0265 (JP); KAGAWA, Yasuyuki, Sodegaura-shi, Chiba 299-0265 (JP)
(74) Representative: Hoffmann Eitle
(86) International application number: PCT/JP2023/005445
(87) International publication number: WO 2023/162850

(57) **Abstract**

A raw material of a coating material for secondary battery separators contains a thermosetting condensation resin.

## Description

### TECHNICAL FIELD

The present invention relates to a raw material of a coating material for secondary battery separators, a coating material for secondary battery separators, a secondary battery separator, and a secondary battery.

### BACKGROUND ART

Conventionally, a separator is provided in a secondary battery to isolate a positive electrode from a negative electrode and to allow ions in an electrolytic solution to pass through.

As such a separator, for example, a polyolefin porous film is known.

On the other hand, a coat layer may be provided on a surface of the separator to impart various physical properties. Such a coat layer is formed, for example, by applying a coating material for secondary battery separators to the surface of the separator and drying the applied material.

As the coating material for secondary battery separators, for example, a slurry for porous films including inorganic particles and a polymer particle aqueous dispersion has been proposed (cf. Patent Document 1). Specifically, the polymer particle aqueous dispersion liquid of Patent Document 1 is an aqueous dispersion liquid (acrylic emulsion) containing polymer particles obtained by polymerizing n-butyl acrylate, ethyl acrylate, acrylonitrile, glycidyl methacrylate, and 2-acrylamide 2-methylpropanesulfonic acid (cf. Example 1 in Patent Document 1).

As the coating material for secondary battery separators, for example, a composition for a porous film of a secondary battery including a non-conductive particle and a water-soluble polymer has been proposed (cf. Patent Document 2). Specifically, the water-soluble polymer of Patent Document 2 is a water-soluble polymer (acrylic water-soluble polymer) obtained by polymerizing acrylamide, methacrylic acid, and dimethylacrylamide (cf. Example 1 in Patent Document 2).

### Citation List

### Patent Documents

Patent Document 1: WO 2010/074202
Patent Document 2: WO 2015/122322

### SUMMARY OF THE INVENTION

### PROBLEM TO BE SOLVED BY THE INVENTION

On the other hand, when the shape of the separator is changed due to shrinkage caused by heat, there is a possibility of a short circuit between the positive and negative electrodes. Therefore, heat resistance is required for the coat layer provided on the separator.

Entry of water into the secondary battery may cause reaction with the water to produce gas. Therefore, low water absorption is required for the coat layer provided on the separator.

The acrylic emulsion of Patent Document 1 disadvantageously has reduced heat resistance while having excellent low water absorption. The acrylic water-soluble polymer of Patent Document 2 disadvantageously has reduced low water absorption while having excellent heat resistance. This makes it impossible to achieve both heat resistance and low water absorption.

The present invention provides a raw material of a coating material for secondary battery separators having excellent heat resistance and low water absorption; a coating material for secondary battery separators containing the raw material of a coating material for secondary battery separators; a secondary battery separator including a coating film of the coating material for secondary battery separators; and a secondary battery including the secondary battery separator.

### MEANS FOR SOLVING THE PROBLEM

The present invention [1] includes a raw material of a coating material for a secondary battery separator, containing a thermosetting condensation resin.

The present invention [2] includes the raw material of a coating material for a secondary battery separator described in [1], in which the thermosetting condensation resin contains a thermosetting condensation resin having an acidic group.

The present invention [3] includes the raw material of a coating material for a secondary battery separator described in [1], in which the thermosetting condensation resin contains a modified methylol melamine condensation resin having an acidic group.

The present invention [4] includes the raw material of a coating material for a secondary battery separator described in [3], in which a content ratio of the modified methylol melamine condensation resin relative to the thermosetting condensation resin exceeds 50% by mass.

The present invention [5] includes the raw material of a coating material for a secondary battery separator described in [1], in which the thermosetting condensation resin is a modified methylol melamine condensation resin having an acidic group.

The present invention [6] includes the raw material of a coating material for a secondary battery separator described in [5], in which the acidic group is a sulfonic acid group.

The present invention [7] includes the raw material of a coating material for a secondary battery separator described in [5] or [6], in which the modified methylol melamine condensation resin is a condensation polymer of modified methylol melamine, the modified methylol melamine is a reaction product of methylol melamine and an acid component, and a content of the acid component relative to 1 mol of the methylol melamine is 0.10 mol or more and less than 0.70 mol.

The present invention [8] includes a coating material for a secondary battery separator, containing the raw material of a coating material for a secondary battery separator described in any one of the above-described [1] to [7]; and an inorganic particle.

The present invention [9] includes a second battery separator, including a porous film; and a coating film of the coating material for a secondary battery separator described in [8] being disposed on at least one surface of the porous film.

The present invention [10] includes a secondary battery including a positive electrode; a negative electrode; and the secondary battery separator described in [9] being disposed between the positive electrode and the negative electrode.

### EFFECTS OF THE INVENTION

The raw material of a coating material for secondary battery separators according to the present invention contains a thermosetting condensation resin. Therefore, such raw material has excellent heat resistance and low water absorption.

The coating material for secondary battery separators according to the present invention contains the raw material of a coating material for secondary battery separators according to the present invention. Therefore, such coating material has excellent heat resistance and low water absorption.

The secondary battery separator of the present invention includes a coating film of the coating material for secondary battery separators according to the present invention. Therefore, such secondary battery separator has excellent heat resistance and low water absorption.

The secondary battery of the present invention includes the secondary battery separator of the present invention. Therefore, such secondary battery has excellent heat resistance and low water absorption.

### DESCRIPTION OF THE EMBODIMENTS

A raw material of a coating material for secondary battery separators contains a thermosetting condensation resin.

Examples of the thermosetting condensation resin include melamine resin, phenol resin, epoxy resin, urea resin, and alkyd resin.

The thermosetting condensation resin preferably has an acidic group from the viewpoint of improving heat resistance.

The thermosetting condensation resin preferably contains at least a melamine resin having an acidic group. As the melamine resin having an acidic group, specifically, a modified methylol melamine condensation resin having an acidic group is used.

The modified methylol melamine condensation resin having an acidic group is a condensation polymer of modified methylol melamine.

The modified methylol melamine is a reaction product of methylol melamine and an acid component.

### <Methylol Melamine>

Methylol melamine is a reaction product of melamine and formaldehyde or paraformaldehyde which can be decomposed into formaldehyde in water.

To allow melamine to react with formaldehyde, water, melamine, and formaldehyde are mixed and heated.

The content of formaldehyde relative to 1 mol of melamine is, for example, 2.4 mol or more, and for example, 5.0 or less, preferably 4.0 or less, more preferably 3.3 mol or less, further preferably 3.1 mol or less.

When the content of formaldehyde relative to 1 mol of melamine is the above-described lower limit or more and the above-described upper limit or less, almost all three amino groups in the melamine can be modified into methylol groups.

The heating conditions are as follows: the heating temperature is, for example, 40°C or more, preferably 50°C or more, and for example, 90°C or less, preferably 80°C or less. The heating time is, for example, 0.5 hours or more, preferably 2 hours or more, and for example, 6 hours or less.

In the above-described reaction, a pH is 3.0 or more, preferably 4.0 or more, more preferably 8.0 or more, further preferably 9.0 or more, and for example, 13.0 or less, preferably 12.0 or less, more preferably 11.8 or less. The pH can be adjusted by adding alkali (e.g., sodium hydroxide).

Thus, the melamine (general formula (1-1) below) is allowed to react with the formaldehyde (general formula (1-2) below) to obtain methylol melamine (general formula (1-3) below).

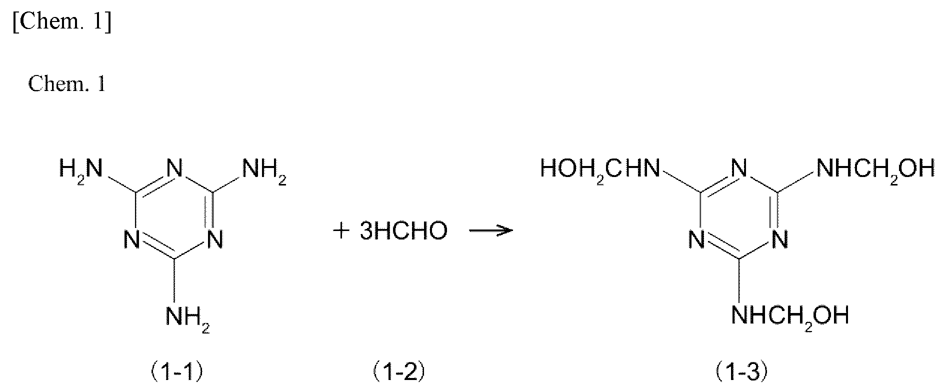

Preferably, the methylol melamine (the above-described general formula (1-3)) is trimethylol melamine in which all of the three amino groups in the melamine are modified into methylol groups.

### <Modified Methylol Melamine>

As described above, the modified methylol melamine is a reaction product of methylol melamine and an acid component.

The acid component is a component capable of reacting with methylol groups of methylol melamine. The acid component is a component for introducing the acidic group into methylol melamine by reacting with the methylol groups of methylol melamine.

Examples of the acid component include carboxylic acid, phosphoric acid, and sulfurous acid.

Examples of the carboxylic acid include maleic acid, succinic acid, phthalic acid, formylbenzoic acid, aminobenzoic acid, acrylic acid, methacrylic acid, and amino acid (e.g., glycine). The carboxylic acid includes a salt thereof and an anhydride thereof. Examples of the salt of the carboxylic acid include sodium maleate and sodium succinate. Examples of the anhydride of the carboxylic acid include maleic anhydride, succinic anhydride, and phthalic anhydride. As the carboxylic acid, preferably, an anhydride of the carboxylic acid is used. As the carboxylic acid, more preferably, maleic anhydride is used.

Examples of the phosphoric acid include phosphonobenzoic acid, aminophenylphosphonic acid, and phosphorous acid. The phosphoric acid includes a salt thereof. Examples of the salt of the phosphoric acid include sodium phosphonobenzoate and disodium hydrogen phosphate.

Examples of the sulfurous acid include sulfobenzoic acid, formylbenzene sulfonic acid, sulfanilic acid, pyrosulfurous acid, and sulfurous acid. The sulfurous acid includes a salt thereof. Examples of the salt of the sulfurous acid include sodium hydrogen sulfite, sodium sulfite, and sodium pyrosulfite. As the sulfurous acid, preferably, sodium hydrogen sulfite, sulfanilic acid, and sodium pyrosulfite are used. As the sulfurous acid, more preferably, sulfanilic acid and sodium hydrogen sulfite are used.

As the acid component, preferably, carboxylic acid and sulfurous acid are used. As the acid component, more preferably, sulfurous acid is used.

These acid components can be used alone or in combination of two or more.

The modified methylol melamine is obtained by allowing methylol melamine to react with an acid component.

To allow methylol melamine to react with an acid component, water, methylol melamine, and the acid component are mixed and heated.

The content of the acid component relative to 1 mol of the methylol melamine is, for example, 0.10 mol or more, preferably 0.15 mol or more, and for example, less than 0.70 mol, preferably 0.65 mol or less, more preferably 0.60 mol or less, further preferably 0.50 mol or less, particularly preferably 0.43 mol or less, most preferably 0.30 mol or less.

When the content of the acid component is within the above-described range, one of three methylol groups in a part of the methylol melamine can be modified into an acidic group derived from the acid component.

The heating conditions are as follows: the heating temperature is, for example, 50°C or more, preferably 70°C or more, and for example, 100°C or less, preferably 90°C or less. The heating time is, for example, 0.5 hours or more, preferably 1 hour or more, and for example, 6 hours or less.

In the above-described reaction, a pH is 3.0 or more, preferably 4.0 or more, more preferably 9.0 or more, and for example, 12.0 or less. The pH can be adjusted by adding alkali (e.g., sodium hydroxide).

Thus, the methylol melamine is allowed to react with the acid component to obtain modified methylol melamine. Specifically, the acid component can modify one of the three methylol groups in the methylol melamine into an acidic group derived from the acid component.

That is, the modified methylol melamine has an acidic group derived from the acid component. Specifically, when the acid component is carboxylic acid, the modified methylol melamine has a carboxyl group as the acidic group. When the acid component is phosphoric acid, the modified methylol melamine has a phosphate group as the acidic group. When the acid component is sulfurous acid, the modified methylol melamine has a sulfonic acid group as the acidic group. As the acidic group, preferably, a carboxyl group and a sulfonic acid group are used. As the acidic group, more preferably, a sulfonic acid group is used.

More specifically, when the acid component is sodium hydrogen sulfite, the methylol melamine (general formula (1-3) below) is allowed to react with the sodium hydrogen sulfite (general formula (2-1) below) to obtain modified methylol melamine (general formula (2-2) below). The modified methylol melamine represented by the general formula (2-2) below has a sulfonic acid group as the acidic group.

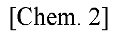

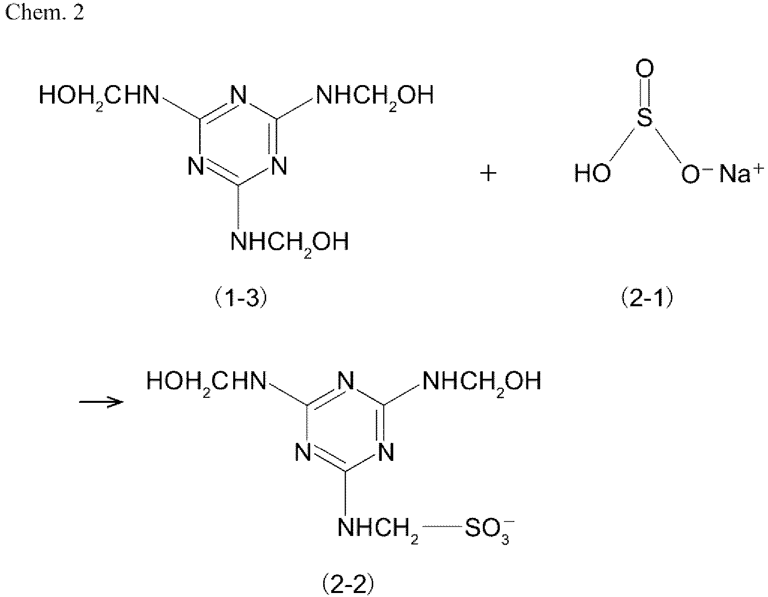

When the acid component is sulfanilic acid, the methylol melamine (general formula (1-3) below) is allowed to react with the sulfanilic acid (general formula (2-3) below) to obtain modified methylol melamine (general formula (2-4) below). The modified methylol melamine represented by the general formula (2-4) below has a sulfonic acid group as the acidic group.

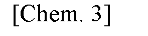

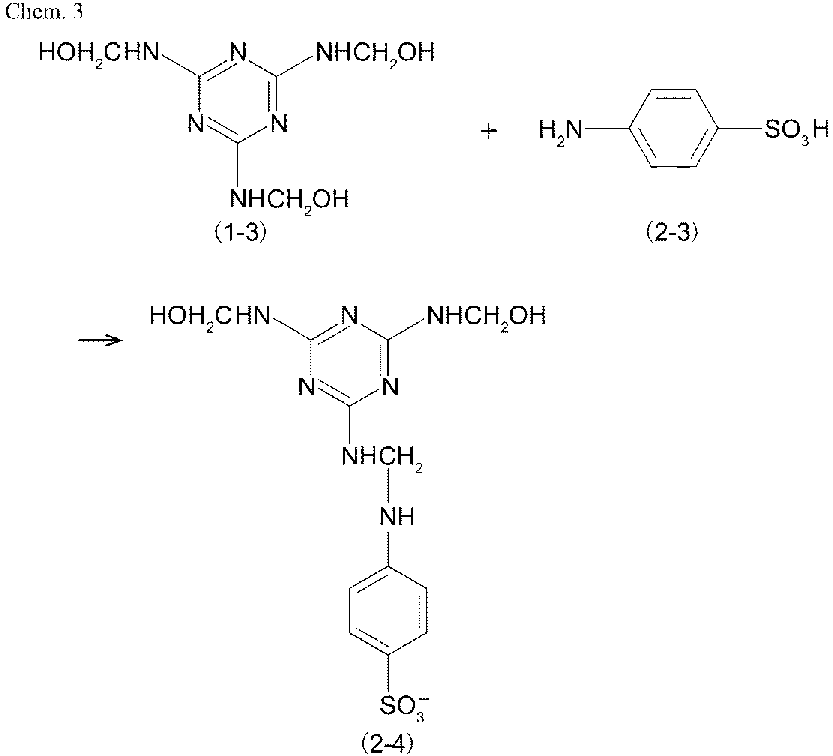

When the acid component is sodium pyrosulfite, the methylol melamine (general formula (1-3) below) is allowed to react with the sodium pyrosulfite (general formula (2-5) below) to obtain modified methylol melamine (general formula (2-6) below). The modified methylol melamine represented by the general formula (2-6) below has a sulfonic acid group as the acidic group.

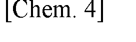

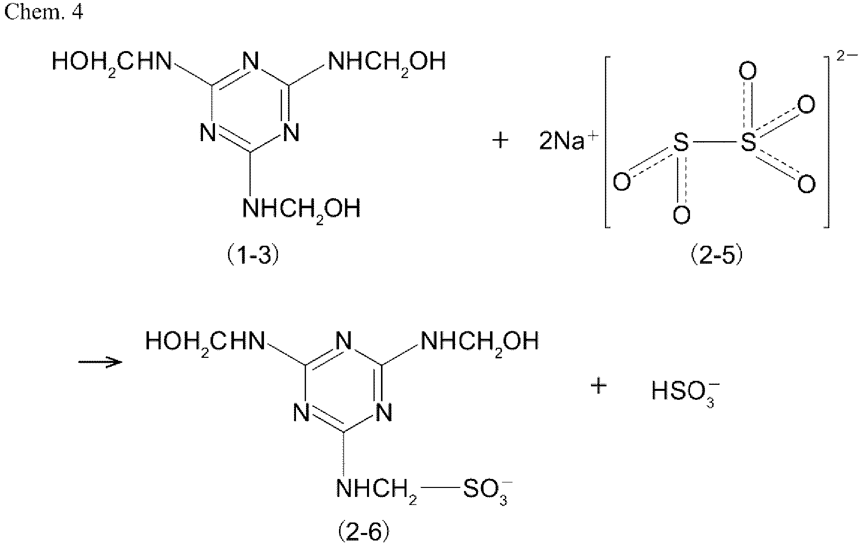

When the acid component is maleic anhydride, the methylol melamine (general formula (1-3) below) is allowed to react with the maleic anhydride (general formula (2-7) below) to obtain modified methylol melamine (general formula (2-8) below). The modified methylol melamine represented by the general formula (2-8) below has a carboxyl group as the acidic group.

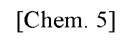

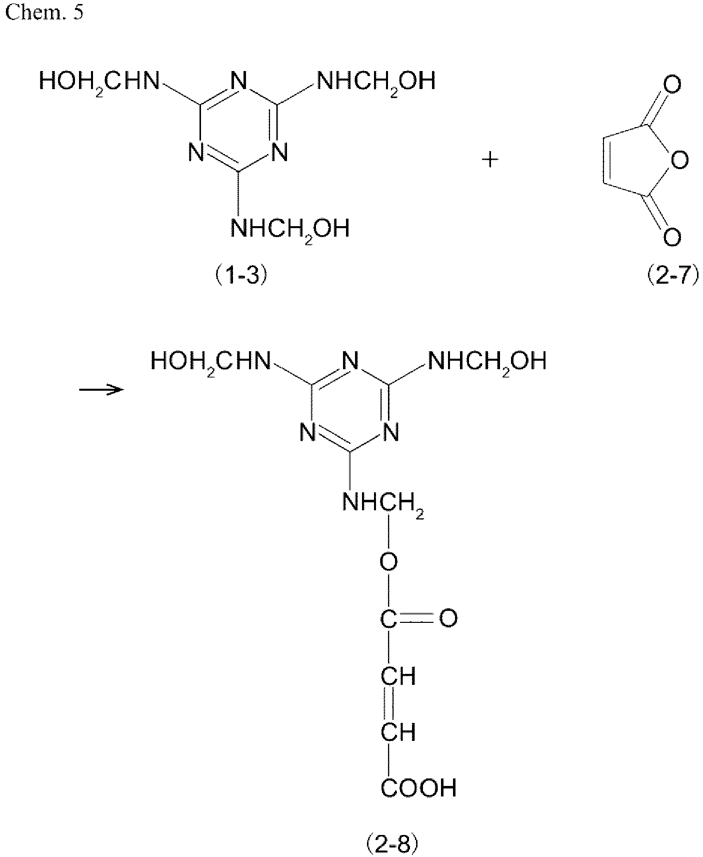

As the modified methylol melamine, preferably, modified methylol melamine represented by the above-described general formula (2-2), modified methylol melamine represented by the above-described general formula (2-4), modified methylol melamine represented by the above-described general formula (2-6), and modified methylol melamine represented by the above-described general formula (2-8) are used. As the modified methylol melamine, more preferably, modified methylol melamine represented by the above-described general formula (2-4) and modified methylol melamine represented by the above-described general formula (2-6) are used.

### <Modified Methylol Melamine Condensation Resin Having Acidic Group>

As described above, the modified methylol melamine condensation resin having an acidic group is a condensation polymer of modified methylol melamine (modified methylol melamine having an acidic group).

To subject the modified methylol melamine to condensation polymerization, for example, the modified methylol melamine is heated in water at a pH of from 5 or more to less than 7, for example, with the addition of an acid (e.g., sulfuric acid).

The heating conditions are as follows: the heating temperature is, for example, 50°C or more, preferably 60°C or more, and for example, 90°C or less, preferably 80°C or less. The heating time is, for example, 1 hour or more, preferably 2 hours or more, and for example, 6 hours or less.

Thereafter, alkali (e.g., sodium hydroxide) is added to adjust the pH to, for example, from 11 or more to 13 or less to stop the condensation polymerization reaction.

In the manner described above, two methylol groups in the modified methylol melamine are subjected to dehydration condensation to obtain a modified methylol melamine condensation resin (an aqueous solution of a modified methylol melamine condensation resin).

The above-described reactions from melamine to modified methylol melamine condensation resin can be carried out continuously or dividedly.

In the aqueous solution of the modified methylol melamine condensation resin, a solids concentration of the modified methylol melamine condensation resin is, for example, 10% by mass or more, preferably 15% by mass or more, and for example, 40% by mass or less.

Such modified methylol melamine condensation resin has the same acidic group as the modified methylol melamine.

A content ratio of the modified methylol melamine condensation resin relative to the thermosetting condensation resin is, for example, above 50% by mass, preferably 70% by mass or more, more preferably 90% by mass or more, and for example, 100% by mass or less from the viewpoint of improving heat resistance and low water absorption.

A content ratio of thermosetting condensation resins other than melamine resin (referred to as other resins) is, for example, less than 50% by mass, preferably 30% by mass or less, more preferably 10% by mass or less.

From the viewpoint of improving heat resistance and low water absorption, the thermosetting condensation resin preferably contains no other resins and consists of the modified methylol melamine condensation resin.

The raw material of a coating material for secondary battery separators contains the above-described thermosetting condensation resin (an aqueous solution of the thermosetting condensation resin). Therefore, a coating material for secondary battery separators having excellent heat resistance and low water absorption can be produced. In the raw material of a coating material for secondary battery separators, a solids concentration of the above-described thermosetting condensation resin is, for example, 10% by mass or more, preferably 15% by mass or more, more preferably 20% by mass or more, and for example, 40% by mass or less.

The coating material for secondary battery separators obtained by using the raw material of a coating material for secondary battery separators is described below.

### <Coating Material for Secondary Battery Separators>

The coating material for secondary battery separators contains the above-described raw material of a coating material for secondary battery separators and inorganic particles.

Examples of the inorganic particles include oxides, nitrides, carbides, sulfides, hydroxides, and potassium titanate. Examples of the oxide include alumina, silica, titania, zirconia, magnesia, ceria, yttria, zinc oxide, and iron oxide. Examples of the nitride include silicon nitride, titanium nitride, and boron nitride. Examples of the carbide include silicon carbide and calcium carbonate. Examples of the sulfide include magnesium sulfate and aluminum sulfate. Examples of the hydroxide include aluminum hydroxide and aluminum hydroxide oxide. Examples of the silicate include talc, kaolinite, dickite, nacrite, halloysite, pyrophyllite, montmorillonite, sericite, mica, amesite, bentonite, asbestos, zeolite, calcium silicate, magnesium silicate, diatomaceous earth, silica sand, and glass.

As the inorganic particles, preferably, hydroxides are used, more preferably aluminum hydroxide oxide is used.

The inorganic particles have an average median diameter D50 of, for example, 0.1 µm or more, preferably 0.5 µm or more, and for example, 5 µm or less, preferably 1 µm or less.

These inorganic particles can be used alone or in combination of two or more.

A mixing ratio of the inorganic particles is described later.

To produce the coating material for secondary battery separators, first, inorganic particles and, if necessary, a dispersant are blended into water to prepare an inorganic particle dispersion liquid. When a dispersant is blended, the coating material for secondary battery separators contains a dispersant.

Examples of the dispersant include an ammonium polycarboxylate and a sodium polycarboxylate. As the dispersant, preferably, an ammonium polycarboxylate is used.

A mixing ratio of the dispersant is, for example, 1 part by mass or more, preferably 2 parts by mass or more, and, for example, 10 parts by mass or less, preferably 5 parts by mass or less with respect to 100 parts by mass of the inorganic particles.

These dispersants can be used alone or in combination of two or more.

Next, the raw material of a coating material for secondary battery separators is blended into the inorganic particle dispersion liquid and then stirred.

A stirring method is not particularly limited, and examples thereof include ball mills, bead mills, planetary ball mills, vibrating ball mills, sand mills, colloid mills, attritors, roll mills, high-speed impeller dispersion, stirrers, dispersers, homogenizers, high-speed impact mills, ultrasonic dispersion, and stirring blades.

In addition, if necessary, an additive such as a hydrophilic resin, a wetting agent, a defoaming agent, or a pH adjusting agent can be blended into the coating material for secondary battery separators at an appropriate ratio. That is, the coating material for secondary battery separators contains an additive, if necessary.

These additives can be used alone or in combination of two or more.

Thus, the coating material for secondary battery separators is obtained. Also, the coating material for secondary battery separators is obtained as a dispersion liquid which is dispersed in water.

The dispersion liquid of the coating material for secondary battery separators has a solids concentration of, for example, 10% by mass or more, preferably 20% by mass or more, more preferably 30% by mass or more, and for example, 50% by mass or less.

In the coating material for secondary battery separators, the content of the raw material (solid content) of a coating material for secondary battery separators is, for example, 1 part by mass or more, preferably 3 parts by mass or more, and for example, 10 parts by mass or less, preferably 5 parts by mass or less, with respect to 100 mass parts of the total amount of the raw material (solid content) of a coating material for secondary battery separators and the inorganic particles. The content of the inorganic particles is, for example, 90 parts by mass or more, preferably 95 parts by mass or more, and for example, 99 parts by mass or less, preferably 97 parts by mass or less, with respect to 100 parts by mass of the total amount of the raw material (solid content) of a coating material for secondary battery separators and the inorganic particles.

The coating material for secondary battery separators contains the raw material of a coating material for secondary battery separators. Therefore, a secondary battery separator having excellent heat resistance and low water absorption can be produced.

The secondary battery separator obtained by using the coating material for secondary battery separators is described below.

### <Secondary Battery Separator>

The secondary battery separator includes a porous film, and a coating film of the coating material for secondary battery separators disposed on at least one surface of the porous film.

### [Porous Film]

Examples of the porous film include polyolefin porous films and aromatic polyamide porous films. Examples of the polyolefin porous film include polyethylene porous films and polypropylene porous films. As the porous film, preferably, a polyolefin porous film is used. The porous film may be subjected to surface treatment as needed. Examples of the surface treatment include corona treatment and plasma treatment.

The porous film has a thickness of, for example, 1 µm or more, preferably 5 µm or more, and for example, 40 µm or less, preferably 20 µm or less.

### [Coating Film]

The coating film imparts heat resistance to the porous film. The coating film is made of the coating material for secondary battery separators.

The coating film has a thickness of, for example, 1 µm or more, preferably 3 µm or more, and for example, 10 µm or less, preferably 8 µm or less.

### [Method for Producing Secondary Battery Separator]

A method for producing the secondary battery separator includes a first step of preparing a porous film, and a second step of applying a coating material for separators to at least one surface of the porous film.

### (First step)

In the first step, a porous film is prepared.

In the second step, the coating material for secondary battery separators (dispersion liquid of the coating material for separators) is applied to at least one surface of the porous film and then, if necessary, dried, thereby obtaining a coating film.

An application method is not particularly limited, and examples thereof include a wire bar method, a gravure coater method, a small-diameter gravure coater method, a reverse roll coater method, a transfer roll coater method, a kiss coater method, a dip coater method, a micro-gravure coating method, a knife coater method, an air doctor coater method, a blade coater method, a rod coater method, a squeeze coater method, a cast coater method, a die coater method, a screen printing method, and a spray application method.

The drying temperature is, for example, 40°C or more, and for example, 80°C or less.

Thus, the secondary battery separator including the porous film, and the coating film of the coating material for secondary battery separators disposed on at least one surface of the porous film is produced.

In the above-described description, the coating film of the coating material for secondary battery separators is disposed on at least one surface of the porous film. Alternatively, the above-described coating film can also be disposed on both surfaces of the porous film.

The secondary battery separator includes the coating film of the coating material for secondary battery separators described above. Therefore, such secondary battery separator has excellent heat resistance and low water absorption. Therefore, the secondary battery separator can be suitably used to produce a secondary battery.

### <Secondary Battery>

The secondary battery includes a positive electrode, a negative electrode, the above-described secondary battery separator which is disposed between the positive electrode and the negative electrode, and an electrolyte which is impregnated into the positive electrode, the negative electrode, and the above-described secondary battery separator.

As the positive electrode, for example, a known electrode including a positive electrode collector and a positive electrode active material which is laminated on the positive electrode collector is used.

Examples of the positive electrode collector include electrically conductive materials such as aluminum, titanium, stainless steel, nickel, calcined carbon, electrically conductive polymers, and electrically conductive glass.

The positive electrode active material is not particularly limited, and examples thereof include known positive electrode active materials such as a lithium-containing transition metal oxide, a lithium-containing phosphate, and a lithium-containing sulfate.

These positive electrode active materials can be used alone or in combination of two or more.

As the negative electrode, for example, a known electrode including a negative electrode collector and a negative electrode active material which is laminated on the negative electrode collector is used.

Examples of the negative electrode collector include electrically conductive materials such as copper and nickel.

The negative electrode active material is not particularly limited, and examples thereof include carbon active materials. Examples of the carbon active material include graphite, soft carbon, and hard carbon.

These negative electrode active materials can be used alone or in combination of two or more.

When a lithium ion battery is used as a secondary battery, an example of the electrolyte includes a solution in which a lithium salt is dissolved in a carbonate compound such as ethylene carbonate (EC), propylene carbonate (PC), and ethyl methyl carbonate (EMC).

Then, in order to produce the secondary battery, for example, a separator of the secondary battery is sandwiched between the positive electrode and the negative electrode to be housed in a battery casing (cell), and the electrolyte is injected into the battery casing. Thus, the secondary battery can be obtained.

The above-described secondary battery has excellent heat resistance and low water absorption because of including the above-described secondary battery separator.

### <Function and Effect>

The raw material of a coating material for secondary battery separators contains a thermosetting condensation resin. Therefore, such raw material has excellent heat resistance and low water absorption.

Specifically, acrylic resins are conventionally known as raw materials of coating materials for secondary battery separators (coating materials for secondary battery separators containing the raw materials of coating materials for secondary battery separators).

To be specific, as described in Patent Document 1, the aqueous dispersion liquid (acrylic emulsion) containing polymers obtained by polymerizing acrylic monomers is known, and as described in Patent Document 2, the water-soluble polymer (acrylic water-soluble polymer) obtained by polymerizing acrylic monomers is known.

However, while the acrylic emulsion of Patent Document 1 has excellent low water absorption from the viewpoint of mainly containing a water-insoluble acrylic ester, it disadvantageously has reduced heat resistance because the inorganic particles are bonded only in a portion where the acrylic emulsion is in contact. In addition, while the acrylic water-soluble polymer of Patent Document 2 has excellent heat resistance from the viewpoint of being capable of efficiently adsorbing to the entire inorganic particles because the binder molecules are dispersed at the molecular level in the coating solution, it disadvantageously has reduced low water absorption because of mainly containing acrylamide which is highly water-soluble.

In contrast to this, this raw material of a coating material for secondary battery separators uses a thermosetting condensation resin instead of the acrylic resin.

The thermosetting condensation resin can improve heat resistance. The thermosetting condensation resin can also improve low water absorption. In particular, when the thermosetting condensation resin contains a modified methylol melamine condensation resin, it has more excellent low water absorption from the viewpoint of low water absorption of a melamine skeleton therein.

That is, the raw material of a coating material for secondary battery separators can achieve both heat resistance and low water absorption due to containing of the thermosetting condensation resin.

The coating material for secondary battery separators contains the raw material of a coating material for secondary battery separators described above. Therefore, such coating material has excellent heat resistance and low water absorption.

The secondary battery separator includes a coating film of the above-described coating material for secondary battery separators. Therefore, such secondary battery separator has excellent heat resistance and low water absorption.

The secondary battery includes the above-described secondary battery separator. Therefore, such secondary battery has excellent heat resistance and low water absorption. Example

The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF THE EMBODIMENTS". All designations of "part" or "parts" and "%" mean part or parts by mass and % by mass, respectively, unless otherwise particularly specified.

### <Raw Material of Coating Material for Secondary Battery Separators, Coating Material for Secondary Battery Separators, and Production of Secondary Battery Separator>

### Example 1

### <Production of Raw Material of Coating Material for Secondary Battery Separators>

A four-necked flask equipped with a stirrer, a thermometer, and a reflux tube was charged with 65 parts by mass of water and 277.8 parts by mass (3.43 mol) of 37% formaldehyde, and the mixture was mixed by stirring. Further, 144.0 parts (1.14 mol) of melamine was added under stirring. The temperature was increased to 60°C, and the pH was set to 11.0 with a 25% aqueous sodium hydroxide solution. Thereafter, the mixture was further allowed to react at 75°C for 3 hours and then cooled to 60°C. Thus, methylol melamine was obtained.

Next, as an acid component, 50.9 parts by mass (0.489 mol) of sodium hydrogen sulfite was added thereto, and the mixture was allowed to reacted at 80°C for 2 hours. Thus, modified methylol melamine was obtained.

Next, the modified methylol melamine was cooled to 40°C or lower, and water was then added thereto to adjust the solids concentration to 26% by mass. Further, the pH was adjusted to 6.8 with 40% sulfuric acid, and the modified methylol melamine was condensed at 70°C for 3 hours. Thereafter, the pH was adjusted to 12.0 with a 25% aqueous sodium hydroxide solution to stop the reaction. Thus, a modified methylol melamine condensation resin (an aqueous solution of the modified methylol melamine condensation resin) was obtained. The aqueous solution of the modified methylol melamine condensation resin had a solids concentration of 25% by mass. The modified methylol melamine condensation resin (aqueous solution of the modified methylol melamine condensation resin) thus obtained was used as the raw material of a coating material for secondary battery separators.

### (Production of Coating Material for Secondary Battery Separators)

To 147.8 parts by mass of distilled water was added 2.96 parts by mass of an aqueous solution of ammonium polycarboxylate (dispersant, trade name SN5468 manufactured by San Nopco Ltd.), and the mixture was stirred with a disperser (at 1000 rpm). Then, 121.2 g of boehmite (inorganic filler, aluminum hydroxide oxide, trade name "APYRAL AOH60" manufactured by Nabaltec GmbH, average median diameter D50: 0.9 µm) was added thereto, and these were stirred for 5 minutes. Thereafter, the mixture was further stirred for 2 minutes with a homogenizer (at 5000 rpm). Thus, an inorganic particle dispersion liquid (inorganic particle concentration of 45% by mass) was obtained.

Next, 0.98 parts by mass of the above-described raw material of a coating material for secondary battery separators (solids concentration of 25% by mass) and 1.26 parts by mass of distilled water were stirred with a stirrer to be diluted. Thereafter, this was blended into 13 g of the inorganic particle dispersion liquid (inorganic particle concentration of 45% by mass) and then stirred for 20 minutes.

Thereafter, this was filtered through a filter having a mesh size of 300 (filtration particle size of 48 µm). Thus, a coating material for secondary battery separators (dispersion liquid of a coating material for secondary battery separators) was produced. The dispersion liquid of the coating material for secondary battery separators had a solids concentration of 40% by mass.

### (Production of Secondary Battery Separator)

### [First Step]

As a porous film, a polyolefin porous film was prepared.

### [Second Step]

Using a wire bar, the above-described coating material for secondary battery separators (dispersion liquid of the coating material for secondary battery separators) was applied to one surface of the polyolefin porous film and then dried at 50°C. Thus, a coating film of the coating material for secondary battery separators was formed on one surface of the polyolefin porous film. Thus, a secondary battery separator was produced.

### Examples 2 to 4 and Comparative Example 1

According to the same procedure as in Example 1, a raw material of a coating material for secondary battery separators, a coating material for secondary battery separators, and a secondary battery separator were produced. The formulations were, however, changed according to those described in Table 1. In Comparative Example 1, an acid component was not blended. In Comparative Example 1, the raw material of a coating material for secondary battery separators was precipitated, thereby failing to produce a secondary battery separator.

### Comparative Example 2

### (Production of Raw Material of Coating Material for Secondary Battery Separators)

An autoclave equipped with a stirrer was charged with 300 parts of ion-exchange water, 41 parts of n-butyl acrylate, 41.5 parts of ethyl acrylate, 15 parts of acrylonitrile, 2.0 parts of glycidyl methacrylate, 0.5 parts of 2-acrylamide-2-methylpropanesulfonic acid, 0.05 parts of t-dodecyl mercaptan as a molecular weight modifier, and 0.3 parts of potassium persulfate as a polymerization initiator, and the mixture was thoroughly stirred. Thereafter, the stirred mixture was warmed to 70°C and subjected to polymerization to obtain an acrylic emulsion. Next, 320 parts of N-methylpyrrolidone was added to 100 parts of the aqueous dispersion liquid of this polymer, and the water was evaporated under reduced pressure. The acrylic emulsion had a solids concentration of 8% by mass. The polymer had a glass transition temperature of -5°C. The acrylic emulsion thus obtained was used as the raw material of a coating material for secondary battery separators.

### (Production of Coating Material for Secondary Battery Separators and Secondary Battery Separator)

According to the same procedure as in Example 1, a coating material for secondary battery separators and a secondary battery separator were produced.

### Comparative Example 3

### (Production of Raw Material of Coating Material for Secondary Battery Separators)

A four-necked flask equipped with a stirrer, a thermometer, a reflux condenser tube, and a nitrogen gas inlet tube was charged with a monomer component consisting of 89.5 parts of acrylamide, 9 parts of methacrylic acid, and 1.5 parts of dimethylacrylamide, 365 parts of ion-exchange water, and 5 parts of isopropyl alcohol, and oxygen in the reaction system was removed with nitrogen gas. Then, as polymerization initiators, 7 parts of a 5% aqueous ammonium persulfate solution and 3 parts of a 5% aqueous sodium hydrogen sulfite solution were charged into the flask under stirring. Thereafter, the temperature was increased from room temperature to 80°C and kept for 3 hours. Thereafter, 162 parts of ion-exchange water was added and the pH was adjusted to 5 with 48% caustic soda. Thus, an aqueous solution of an acrylic water-soluble polymer was obtained. The aqueous solution of the polymer had a solids concentration of 15.2% by mass. The aqueous solution of the acrylic water-soluble polymer thus obtained was used as the raw material of a coating material for secondary battery separators.

### (Production of Coating Material for Secondary Battery Separators and Secondary Battery Separator)

According to the same procedure as in Example 1, a coating material for secondary battery separators and a secondary battery separator were produced.

### <Evaluation>

### [Heat Resistance]

Each of the secondary battery separators of Examples and Comparative Examples was cut into a size of 5 cm× 5 cm as test pieces. After the test pieces were left to stand in an oven at 150°C for 1 hour, the length of each side was measured, and a thermal shrinkage rate was calculated. The heat resistance was evaluated in accordance with the following criteria. The results are shown in Table 1.
⊚: The thermal shrinkage rate was below 10%
o: The thermal shrinkage rate was 10% or more and below 20%.
△: The thermal shrinkage rate was 20% or more and below 40%.
×: The thermal shrinkage rate was 40% or more.

### [Low Water Absorption Rate]

Five grams of each of the raw materials of a coating material for secondary battery separators in Examples and Comparative Examples was dried with a vacuum dryer at room temperature for 24 hours or more. After drying, the humidity of the raw material of a coating material for secondary battery separators was further controlled in a thermostatic chamber having a temperature of 24°C and a humidity of 55% for 24 hours. Thereafter, 0.5 g of the raw material of a coating material for secondary battery separators was immersed in 15 g of dehydrated ethanol and allowed to stand at 24°C for 24 hours. The moisture content in the ethanol solution was measured using a Karl Fischer titrator (Automatic Potentiometric Titrator AT-510) manufactured by KYOTO ELECTRONICS MANUFACTURING CO., LTD. The results are shown in Table 1. The lower moisture content can be evaluated as excellent low water absorption rate.

**[Table 1]**

| Ex. & Comp. Ex. No. | Acid component | Acidic group | Content of formaldehyde relative to 1 mol of melamine (mol) | Content of acidic group relative to 1 mol of methylol melamine (mol) | Evaluation | |
|---|---|---|---|---|---|---|
| | | | | | Heat resistance | Low water absorption rate |
| | | | | | | Moisture content (ppm) |
| Ex. 1 | Sodium hydrogen sulfite | Sulfonic acid group | 3 | 0.43 | ⊚ | 120,000 |
| Ex. 2 | Sulfanilic acid | Sulfonic acid group | 2.5 | 0.25 | ⊚ | 100,000 |
| Ex. 3 | Sodium pyrosulfite | Sulfonic acid group | 2.5 | 0.20 | ⊚ | 100,000 |
| Ex. 4 | Maleic anhydride | Carboxyl group | 3 | 0.60 | ⊚ | 120,000 |
| Comp. Ex. 1 | - | - | 3 | - | - | - |
| Comp. Ex. 2 | (Acrylic emulsion) | | | | × | 80,000 |
| Comp. Ex. 3 | (Acrylic water-soluble polymer) | | | | 0 | 200,000 |

While the illustrative embodiments of the present invention are provided in the above-described invention, such is for illustrative purpose only and it is not to be construed restrictively. Modification and variation of the present invention that will be obvious to those skilled in the art is to be covered by the following claims.

### Industrial Applicability

The raw material of a coating material for secondary battery separators, the coating material for secondary battery separators, and the secondary battery separator according to the present invention can be suitably used, for example, for producing a secondary battery. The secondary battery of the present invention can be suitably used, for example, in various devices and automobiles.

## Claims

1. A raw material of a coating material for a secondary battery separator, comprising a thermosetting condensation resin.

2. The raw material of a coating material for a secondary battery separator according to claim 1, wherein the thermosetting condensation resin comprises a thermosetting condensation resin having an acidic group.

3. The raw material of a coating material for a secondary battery separator according to claim 1, wherein the thermosetting condensation resin comprises a modified methylol melamine condensation resin having an acidic group.

4. The raw material of a coating material for a secondary battery separator according to claim 3, wherein a content ratio of the modified methylol melamine condensation resin relative to the thermosetting condensation resin exceeds 50% by mass.

5. The raw material of a coating material for a secondary battery separator according to claim 1, wherein the thermosetting condensation resin is a modified methylol melamine condensation resin having an acidic group.

6. The raw material of a coating material for a secondary battery separator according to claim 5, wherein the acidic group is a sulfonic acid group.

7. The raw material of a coating material for a secondary battery separator according to claim 5, wherein
the modified methylol melamine condensation resin is a condensation polymer of modified methylol melamine,
the modified methylol melamine is a reaction product of methylol melamine and an acid component, and
a content of the acid component relative to 1 mol of the methylol melamine is 0.10 mol or more and less than 0.70 mol.

8. A coating material for a secondary battery separator, comprising the raw material of a coating material for a secondary battery separator according to claim 1; and an inorganic particle.

9. A second battery separator, comprising
a porous film; and
a coating film of the coating material for a secondary battery separator according to claim 8 being disposed on at least one surface of the porous film.

10. A secondary battery comprising a positive electrode; a negative electrode; and the secondary battery separator according to claim 9 being disposed between the positive electrode and the negative electrode.
